Europäisches Patentamt

European Patent Office

Office européen des brevets

(19)

(11) **EP 0 549 445 B1**

(12) **FASCICULE DE BREVET EUROPEEN**

(45) Date de publication et mention
de la délivrance du brevet:
**28.01.1998 Bulletin 1998/05**

(51) Int Cl.6: **H04L 5/06**

(21) Numéro de dépôt: **92403485.3**

(22) Date de dépôt: **21.12.1992**

(54) **Procédé de transmission de signaux de référence dans un système de transmission de données sur plusieurs porteuses**

Verfahren zur Übertragung von Referenzsignalen in einem Mehrträgerdatenübertragungssystem

Method for the transmission of reference signals in a multicarrier data transmission system

(84) Etats contractants désignés:
**BE DE ES GB IT NL**

(30) Priorité: **26.12.1991 FR 9116165**

(43) Date de publication de la demande:
**30.06.1993 Bulletin 1993/26**

(73) Titulaire: **THOMSON-CSF**
**75008 Paris (FR)**

(72) Inventeurs:
- **Pirez, Didier**
  **F-92402 Courbevoie Cedex (FR)**
- **Gombault, Denis**
  **F-92402 Courbevoie Cedex (FR)**

(74) Mandataire: **Lincot, Georges et al**
**THOMSON-CSF-S.C.P.I.,**
**13, Avenue du Président**
**Salvador Allende**
**94117 Arcueil Cédex (FR)**

(56) Documents cités:
**EP-A- 0 441 731          WO-A-91/20140**
**US-A- 4 881 245**

- **PHILIPS RESEARCH REPORTS + SUPPLEMENTS. no. 4, 1973, EINDHOVEN NL pages 91 - 98**
- **SCHüELI 'Schnelle Parallel Daten bertragung mit zeitbegrenzten Impulsen'**
- **IEE PROCEEDINGS I. SOLID- STATE & ELECTRON DEVICES. vol. 136, no. 1, Février 1989, STEVENAGE GB pages 11 - 19 PENNINGTON 'Techniques for medium - speed data transmission over HF channels'**

## Description

La présente invention concerne un procédé de modulation et de démodulation cohérente pour la transmission de données haut débit en HF.

Elle s'applique notamment à la transmission numérique de la parole par voie radio.

Il est connu que les liaisons HF ionosphériques se propagent par réflexions sur les couches de l'ionosphère selon des trajets de propagation multiples. Du fait de la turbulence du milieu ionosphérique, le signal reçu pour chacun des trajets varie de façon aléatoire en amplitude et en phase. Ceci provoque le phénomène d'évanouissement encore appelé "fading" du signal composite reçu. Comme les temps de propagation sur chacun des trajets sont dissemblables, le signal reçu est formé de plusieurs composantes étalées dans le temps sur un intervalle qui peut atteindre plusieurs millisecondes. D'autre part, les variations temporelles des hauteurs des couches ionosphériques provoquent des déviations fréquentielles qui se caractérisent par des décalages Doppler sur chacune des composantes du trajet multiple.

Tous ces effets se conjuguent pour produire une distorsion du signal et dégrader la qualité de la liaison. Il en résulte que les transmissions de données haut débit dans la gamme HF sont rendues particulièrement difficiles. C'est pourquoi les modulateurs-démodulateurs parallèles encore désigné "modem" parallèle et transmettant un grand nombre de porteuses en parallèle, à faible vitesse de modulation, ont été historiquement introduits. Le type de modulation le plus souvent utilisé est la modulation de phase différentielle à N états de phase (N-DPSK) qui permet de transmettre plusieurs bits par symbole sur chaque sous-porteuse en utilisant une largeur de bande réduite.

Le signal émis est alors formé par une suite de trames de durée T égale à environ 20 millisecondes, chaque trame étant constituée d'une somme de N sinusoïdes à fréquences multiples d'une quantité $D_f$ calculée de manière à assurer l'orthogonalité des sous-porteuses sur une durée de temps $T_u$ inférieure à la durée de la trame T.

La différence $T_g = T-T_u$ définit un temps de garde qui permet d'éviter l'interférence inter-symboles sur la durée d'analyse $T_u$. Ceci permet de séparer dans chaque trame les différentes sous-porteuses par une transformée de Fourrier et de les démoduler une par une. La modulation utilisée sur chaque sous-porteuse est en général une modulation différentielle de phase à 2 ou 4 états .

L'un des premiers systèmes de transmission HF basé sur un modem à forme d'onde parallèle est connu de l'article intitulé "Kineplex, a bandwith efficient binary transmission system" de MM. MOSIER, RR, et CLABAUGH, RG, paru dans la revue AIEE Trans. ·Part I, commun and electron, 1958, 76, p.p.723-728. Ce modem qui a été utilisé pour la transmission de données point à point, utilisait 16 sous-canaux au débit de 75 bauds avec une modulation différentielle à quatre états de phase. Le débit global atteint était de 1400 bits par seconde. Un autre système dénommé "KATHRYN" qui a été développé par General Atronix en 1961 et dont une publication peut être trouvée dans la revue IEEE Transmission de 1969, COM- 17, p.p. 118 128 ayant pour titre "Field test result of the AN/GSC-10 digital data terminal" de MM. KIRSHAL GRAY PR. and HANNA, JR, DW, a permis d'effectuer une modulation de 34 sous-porteuses à 75 bauds. La modulation effectuée sur chaque sous-porteuse permettait de mesurer la caractéristique du canal de transmission pour chacune d'entre elles et de corriger la phase de chaque donnée utile. Les bonnes performances de ce procédé sont limités cependant au fading lent et à un étalement des multitrajets qui n'excède pas une milliseconde.

Un nouveau procédé multitons connu sous le nom "codem" fut par la suite développé en 1971 par General Atronix. Ce procédé dont une description peut être trouvée dans la revue IEEE Trans. 1973 COM- 21 p.p 159-174 sous le titre "A combinated coding and modulation approach for communication over dispersive channels" de M. CHASE, D effectuait une modulation différentielle à états de phases sur une forme d'onde composée de 25 porteuses orthogonales avec un code correcteur d'erreur (25,16) à décisions pondérées basées sur les amplitudes des parties réelles et imaginaires du symbole permettait de réduire les effets du "fading" sélectif. Des mesures effectuées sur ce procédé ont fait apparaître un gain en performance d'un ordre 2 par rapport à un modem 16 tons. Les techniques utilisées par le procédé "codem" furent développées plus tard dans le cadre de la norme ANDVT (Advanced Neuroband Digital Voice Terminal) dont une description peut être trouvée dans l'article ayant pour titre "Modulation and coding study for the advanced neuroband digital voice terminal" de MM. JEWET, WM and COLE, JR, R de NRL Mémorandum Report 3811, elles ont trouvé leur application dans un modulateur-démodulateur optimisé pour la transmission de phonie numérique à 39 tons espacés de 56,25 Hz avec une durée utile de trame égale à 17,8 ms, en modulation différentielle à quatre états de phase (4-DPSK). Dans ce modem chaque trame composée de 39 symboles est transmise au débit de 44,44 Hz ce qui correspond à une durée de 22,5 ms se décomposant en 17,8 ms de trame utile et 4,7 ms de temps de garde. Le débit global est d'environ 1733,3 bauds ou 3466,6 bit par seconde. A 2400 bits par seconde, le débit supplémentaire est utilisé pour la protection avec une redondance de 2 des 24 bits les plus importants de la trame de phonie composée de 54 bits. Dans ce codage, le temps de garde de 4,7 ms et un entrelacement séquentiel sur les 34 tons permettent de lutter contre les effets de la propagation ionosphérique.

Enfin en 1988 le groupe HARRIS RF Communication a mis au point un modem multitons dont une description peut être trouvée dans l'article intitulé "Advances in HF technology" de MM. LUHOWY, GJ and PERKINS, FA déjà publié dans HARRIS Communication le 29 septembre 1983 basé sur une forme d'onde parallèle à 39 porteuses. A 2400 bits par seconde un code de Reed-Solomon (14,10,2) et un entrelacement temporel permettent de minimiser l'influence des multitrajets. Pour des débits plus faibles, des codes plus robustes sont utilisés. Afin d'améliorer la précision de la référence de phase pour la démodulation de phase, le groupe HARRIS a aussi développé une technique appelée IPSK (Interpolated PSK) permettant de gagner sur les performances d'une démodulation différentielle classique. Suivant cette méthode, les tons sont alternativement modulés avec des données utiles et des phases de référence. En réception, l'information sur la référence de phase est extraite des tons de référence et un algorithme d'interpolation est utilisé pour obtenir les valeurs entre ces tons. Les phases utiles sont déterminées par la différence entre les phases de référence interpolées et les valeurs des phases reçues.

Si les traitements précités présentent l'avantage de pouvoir être mis en oeuvre de façon relativement simple, les performances qui sont obtenues sont toutefois limitées par un certain nombre de facteurs. En premier lieu, l'amplitude de la forme d'onde émise n'est pas constante et il existe environ un rapport de 10 décibels entre la puissance crête émise et la puissance moyenne bien que ce résultat puisse être à nuancer dans la mesure où généralement le modem supporte un certain écrêtage à l'émission. Il s'avère également que le modem est toujours très sensible au fading sélectif en fréquence produit par les trajets multiples car la fonction de transfert du canal peut toujours présenter des évanouissements profonds à certaines fréquences qui conduisent à des taux d'erreur très importants sur les sous-porteuses correspondantes, bien qu'un codage correcteur d'erreur et un entrelacement fréquentiel permettent de lutter contre ce phénomène. D'autre part, la démodulation différentielle entraîne toujours une perte de quelques décibels par rapport à une démodulation cohérente, cette perte étant d'environ 2 décibels en QPSK non codé sur un canal bruit blanc par exemple, bien que l'interpolation dans le modem de HARRIS permette de réduire cette perte. Enfin, le manque d'informations de qualité au niveau de la démodulation empêche de faire un décodage pondéré de codes convolutionnels ou autres.

D'autres procédés, tel que celui décrit dans la demande de brevet EP 0 441 731 $A_1$ permettent une démodulation cohérente d'une forme d'onde composée de plusieurs porteuses en parallèles dont certaines sont des porteuses de référence utilisées pour apprécier la qualité des transmissions. Ces procédés qui sont utilisés notamment dans la bande 1 à 10 GHz pour les communications entre véhicules, s'avèrent inapplicables dans la gamme HF sur canal de transmission ionosphérique car l'estimation du niveau de bruit sur les fréquences de référence est insuffisante pour permettre au processus de démodulation de rester optimal dans la bande de fréquence en présence de brouilleurs. Le but de l'invention est de pallier les inconvénients précités.

A cet effet, l'invention a pour objet un procédé de modulation et de démodulation cohérent pour la transmission de données haut débit en HF du type consistant à transmettre en parallèle sur un nombre déterminé de canaux à bas débits des symboles d'information utiles, les signaux représentant ces symboles étant modulés suivant une modulation comportant un nombre déterminé d'états de phase, caractérisé en ce qu'il consiste à transmettre en parallèle sur l'ensemble des canaux des trames de symboles utiles et des trames de symboles de référence, en insérant entre chaque trame utile une trame de symboles de référence et en alternant chaque symbole de référence avec un symbole utile dans chaque trame de symboles de référence, à évaluer en démodulation le canal HF sur les porteuses des canaux HF transportant les symboles de référence en effectuant pour chaque symbole de référence émis le rapport entre la valeur du signal qui lui correspond et une valeur de référence connue , à déterminer les valeurs de bruits instantané en effectuant pour chaque canal le carré de la différence entre sa valeur bruitée et sa valeur estimée filtrée, à effectuer un filtrage temporel des valeurs estimées des canaux sur chacune des porteuses en calculant les coefficients du filtre qui rendent minimum l'erreur moyenne d'estimation et à décoder chaque symbole reçu sur chacune des porteuses par une transformée de Fourier des échantillons de la trame temporelle utile.

D'autres caractéristiques et avantages de l'invention apparaîtront ci-après à l'aide de la description qui suit faite en regard des dessins annexés qui représentent :

- La figure 1 un tableau de répartition des symboles de référence une trame sur deux relativement aux fréquences porteuses de chacune des trames.
- La figure 2 un dimensionnement temporel des trames.
- La figure 3 un mode de réalisation d'un modem selon l'invention.
- Les figures 4A et 4B des modes de réalisation des modules d'entrelacement et de désentrelacement de la figure 3.
- La figure 5 un organigramme pour illustrer le fonctionnement d'un démodulateur représenté suivant le schéma synoptique de la figure 3.

A la différence de ce qui est prescrit par la norme ANDVT citée précédemment, le procédé de modulation selon l'invention met en oeuvre une démodulation cohérente grâce à une transmission de sous-porteuses de référence connues du récepteur. Cette disposition permet pour chaque sous-porteuse transportant une information utile, d'une part, d'estimer une référence de phase et d'amplitude ainsi qu'un niveau de bruit et d'autre part, de réaliser un décodage cohérent pondéré des codes convolutionnels classiques ou des modulations codées. Dans l'exemple de réalisation décrit ci-après la protection contre le fading et les multitrajets est assurée par un entrelacement temporel à longueur variable et par une modulation à 8 états de phase (8PSK) de redondance 4/3 qui protège comme dans le cas de la norme ANTDV les bits importants de trames numériques transmises par des vocodeurs. Ainsi dans le cas par exemple, des vocodeurs codés suivant la norme OTAN LPC10, 2400 bit/s, où chaque trame comporte 54 bits, 41 bits étant affectés pour le codage des 10 coefficients du filtre de synthèse, 5 bits servant au codage de l'énergie sur 32 valeurs, 7 bits transmettant le voisement ou le pitch, et 1 bit servant à la synchronisation, les bits importants à protéger sont alors 6 bits de poids fort pour le pitch, 3 ou 4 bits de poids fort pour l'énergie, 2 à 4 bits de poids fort pour les quatre premiers coefficients du filtre de synthèse, ainsi que le bit de synchronisation, ce qui amène à protéger environ 21 bits.

La transmission haut débit est assurée par la mise en parallèle d'un nombre suffisant de canaux à bas débits sur des fréquences adjacentes, l'intervalle fréquentiel entre chaque canal étant choisi pour assurer l'orthogonalité des symboles.

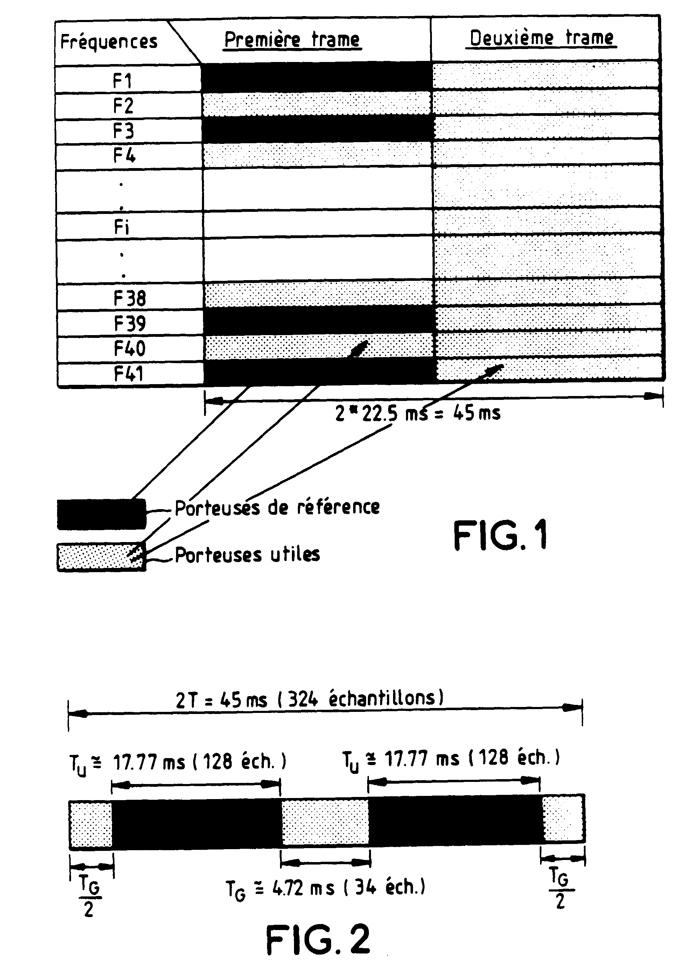

Dans le cas de la norme LPC10 cela conduit à utiliser 41 porteuses, 21 d'entre elles, les porteuses impaires par exemple (1, 3, ..., 41) transportant des symboles de référence une trame sur deux de la façon représentée par le tableau des fréquences de la figure 1 et la répartition temporelles de ces fréquences de la figure 2, tous deux représentés sur deux trames successives. Comme dans ce cas la durée d'une trame est de 22,5 ms, le débit de transmission obtenu est de 44,44 trames/seconde. Le signal temporel correspondant est obtenu par une transformée de Fourier inverse de ces fréquences sur 128 points. Avec par exemple une fréquence d'échantillonnage de 7200 Hz, l'intervalle fréquentiel entre chaque porteuse est dans ces conditions de 56,25 Hz conduisant de la façon représentée à la figure 2 à une durée de trame utile $T_u = 17,77$ ms et à un temps de garde $T_G = 4,72$ ms.

Le signal émis pendant le temps de garde est obtenu en périodisant la zone utile afin d'éviter les discontinuités de phase aux limites de cette zone.

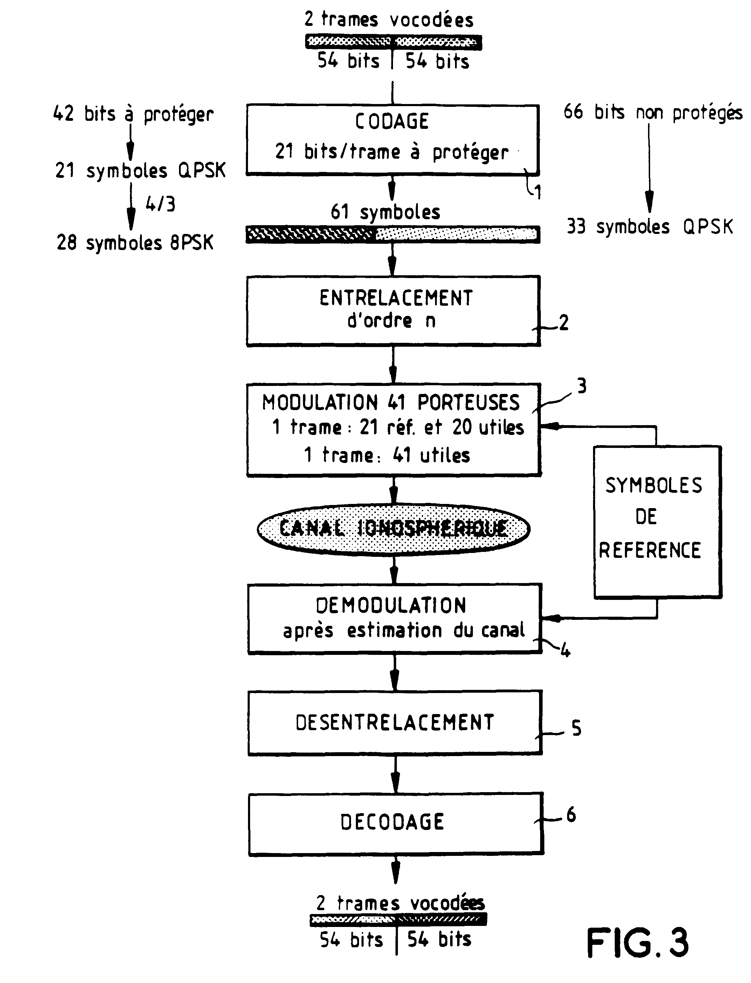

Une structure de modem correspondante fonctionnant suivant ce principe est représentée à la figure 3. Le modem comporte dans la partie émission un module de codage 1, un module d'entrelacement 2 et un module de modulation 3. La partie réception comprend un module de démodulation 4, un module de désentrelacement 5 et un module de décodage 6. Les modules de codage1 et de décodage 6 effectuent une modulation codée à 8 états de phase de redondance 4/3 pour protéger, comme dans le cas de la norme ANDVT les bits importants de chaque trame vocodée transmise. Ainsi, si comme dans le cas de la norme LPC10 21 bits dans chaque trame sont à protéger, ceux-ci donneront lieu à 21/2 symboles QPSK et à 14 symboles codés 8PSK. En prenant 2 trames vocodées de 108 bits à la suite celà permet de protéger les 42 bits les plus importants sur les deux trames. La sortie du codeur 1 fournit dans ces conditions : $\frac{42}{2} \cdot \frac{4}{3} = 28$ symboles 8PSK protégés et $\frac{108 - 42}{2} = 33$ symboles QPSK non protégés.

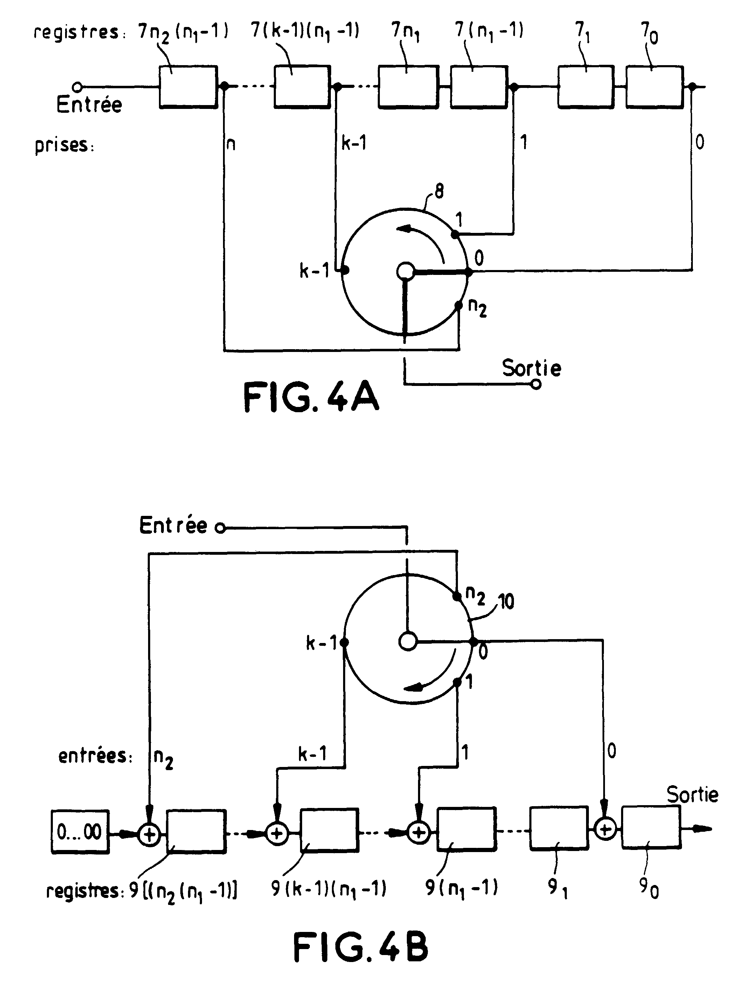

Au total le codeur 1 fournit 61 symboles réparties sur 2 trames, 20 sur la première (sur les porteuses paires par exemple) et 41, sur la deuxième comme le montre le tableau de la figure 1. L'entrelacement qui suit est mis en oeuvre par le module d'entrelacement 2 composé de la façon représentée à la figure 4A de $n_2(n_1-1)$ registres à décalage référencés de $7_0$ à $7n_2(n_1 - 1)$ dont les prises sont situées aux multiples de $(n_1 -1)$.

Le désentrelacement est effectué par le module 5 composé aussi de la façon représentée à la figure 4B par un ensemble de $n_2(n_1 -1)+1$ registres à décalage reliés en série, référencés de $9_0$ à $9_{n_2}(n_1-1)$ et d'un commutateur 10 reliant cycliquement l'entrée du module de désentrelacement aux différentes sorties des registres.

Pour effectuer l'estimation du canal à partir de la première trame de référence transmise jusqu'à la dernière trame utile, l'ensemble des informations émises est précédé et suivi de 16 trames supplémentaires. Ces trames structurées comme les premières, contiennent une fois sur deux des symboles de référence pour estimer le canal en amont ou en aval de chaque trame à démoduler. Les symboles de référence sont par exemple produit aléatoirement toutes les deux trames et stockés à la suite dans un fichier qui est lu lors de la démodulation.

La récupération des signaux sur chacune des porteuses de la bande de transmission est effectuée par le module de démodulation 4 par une transformée de Fourier sur les 128 échantillons de la trame temporelle utile. Ceci permet de disposer, une trame sur deux, d'informations concernant le canal sur les 21 porteuses impaires de référence. Après estimation du, canal et du bruit à l'étape 4, le décodage effectué à l'étape 5 consiste à rechercher pour chaque symbole reçu le code qui rend minimum la relation :

$$\sum_i \text{Réelle} \left\{ \frac{a_i^* . \alpha_i^* . Z_i}{\sigma_i^2} \right\}$$

où

$\alpha_i^*$ est la valeur conjuguée du canal estimé

$Z_i$ est le symbole reçu

$\sigma_i^2$ est la variance du bruit et

$\alpha_i$ est le symbole de référence sur un chemin donné.

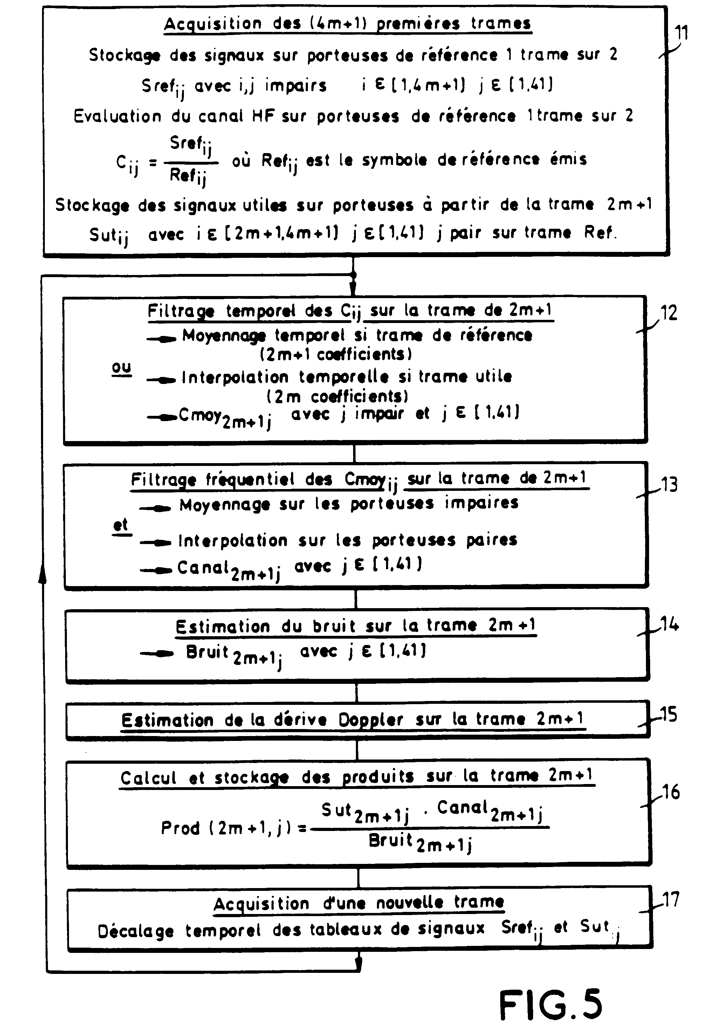

Le schéma synoptique présenté à la figure 5 montre les diffrérentes étapes référencées de 11 à 17 de l'algorithme déployé. Sur ce schéma 2m représente le nombre de trames rajoutées en début et en fin de transmission pour estimer le canal. L'acquisition des 4m+1 premières trames a lieu à l'étape 11 pour effectuer une première évaluation $C_i^j$ du canal HF sur les porteuses de référence une trame sur deux, chaque valeur $C_i^j$ étant obtenue par le quotient du signal $Sref_{ij}$ sur la porteuse de référence (pour j impaire et $j \in 1,41]$ avec une valeur de référence $Ref_{ij}$ connu du démodulateur Dans cette étape les signaux utiles $Sut_{(ij)}$ sont stockés à partir de la trame 2m+1.

L'estimation du canal qui a lieu à l'étape 12 consiste à effectuer un filtrage temporel des valeurs $C_i^i$. Ce filtrage consiste à rechercher les coefficients du filtre et le nombre d'entre eux qui rendent minimum l'erreur moyenne d'estimation. Pour filtrer les premières valeurs du canal sur la première trame de référence transmise, il est nécessaire de disposer des 2m trames supplémentaires qui précédent celle-ci. Parmi ces trames, une sur deux transporte des symboles de référence sur les 21 porteuses impaires.

Si $h_{(i)}$ désigne les coefficients du filtre, la valeur moyenne $C_{moy2m+1,j}$ obtenue à la sortie du filtre est définie par la relation

$$C_{moy2m+1,j} = \sum_{i=-m}^{m} h(i) \cdot C_{2(i+|m|+1,j}$$

pour j impair et compris entre 1 et 41.

Comme une trame utile ne contient pas de porteuse transportant des symboles de référence, une interpolation temporelle sur les 21 porteuses d'ordre impair de cette trame est effectuée avec un nombre de coefficients du filtre moyenneur fixé à 2m.

Pour les mêmes raisons que précédemment, la dernière trame utile transmise est suivie de 2m trames supplémentaires pour effectuer l'estimation du canal.

Le filtrage fréquentiel qui est effectué à l'étape 13 consiste à effectuer sur chaque trame un filtrage fréquentiel sur chacune des porteuses. Ceci est obtenu à l'aide d'un jeu de filtres dont le nombre de coefficients est variable en fonction de la position de chaque porteuse considérée dans la trame. Sur les porteuses impaires qui fournissent des informations sur le canal, les filtres mis en oeuvre sont d'ordre impair. Pour les autres cas une interpolation fréquentielle est effectuée. Ces filtres sont de type passe-bas. Comme généralement le délai maximum des multi-trajets est de l'ordre de $\pm$ 2ms seule la partie du signal comprise entre ces deux valeurs est retenue. Ceci permet d'obtenir sur toute trame de rang 2m + 1 une estimation du canal sur chacune des 41 porteuses.

L'estimation du bruit a lieu à l'étape 14.

Les valeurs de bruit instantanées sur les porteuses impaires d'une trame de référence sont déterminées par une relation de la forme :

$$b_{inst}(j) = \left| C_j - Canal_j \right|^2$$

avec $C_j$ = valeur bruitée du canal sur la porteuse j et $Canal_j$ = valeur estimée du canal après filtrage sur la porteuse j pour j impair et compris entre 1 et 41.

Ces valeurs de bruit instantanées sont ensuite filtrées par un filtre BF de Butterworth à bande étroite d'ordre 3.

Pour une trame utile où il n'y a pas de signaux de référence qui permettent de déterminer les $C_j$, les valeurs du bruit sont estimées sur les 2 trames de référence entourant la trame considéré. Une moyenne des deux estimations permet d'obtenir la valeur du bruit sur les porteuses impaires de la trame utile.

Les valeurs sur les porteuses paires de la trame s'obtiennent aussi par le même type d'interpolation.

On dispose ainsi, sur toutes les porteuses d'une trame de rang 2m + 1, des valeurs Bruit (j) d'estimation du bruit j compris entre 1 et 41.

L'estimation de la dérive Doppler qui est effectuée à l'étape 15 a lieu suivant un principe ressemblant à celui utilisé dans la norme A.N.D.V.T. Celle-ci est obtenue en effectuant une moyenne sur l'ensemble des porteuses des différences de phase trouvées entre 2 trames successives sur l'estimation du canal. Il est supposé dans ce cas que les variations de phase dûes au fading sont faible.

Le signal de phase bruité sur la trame i est alors :

$$\text{Signal de phase (i)} = \sum_{j=1}^{\text{Nporteuses}} \frac{\text{Canal}_{(i-1)j} \cdot \text{Canal}_{ij}^*}{\text{Bruit}_{ij}}$$

Le bruit étant supposé constant entre 2 trames successives.

Ce signal est ensuite filtré par un filtre complexe de Butterworth d'ordre 3 dont le produit FcTe (fréquence de coupure période d'échantillonnage) est très faible.

L'estimation de la dérive trame par trame qui est ainsi obtenue reste relativement lisse, et s'exprime par la relation :

$$\text{Dérive (i)} = \frac{\theta_i}{2\pi T}$$

Dans laquelle $\theta_i$ est la phase de signal de phase filtré sur la trame i et T est la période trame (T = 22.5 ms).

Le calcul et le stockage des produits sur la trame de rang 2m + 1 effectué à l'étape 16 a lieu à partir des valeurs du canal et du bruit sur chacune des porteuses. Ce calcul a lieu suivant la relation :

$$\text{Pr od (2m + 1,j)} = \frac{\text{Sut.}_{2m+1,j} \cdot \text{Canal}_{2m+1}^*}{\text{Bruit}_{2m+1,j}}$$

pour j compris entre 1 et 41

Sut.(2m + 1), j est le signal utile sur la trame 2m + 1 et la porteuse j, Canal* 2m + 1, j est la valeur conjuguée du canal dans les mêmes conditions et Bruit 2m + 1, j est le bruit dans les mêmes conditions.

## Revendications

1. Procédé de modulation et de démodulation cohérent pour la transmission de données haut débit en HF du type consistant à transmettre en parallèle sur un nombre déterminé de canaux à bas débits ($F_1...F_{41}$) des symboles d'information utiles et des symboles de référence, les signaux représentant ces symboles étant modulés suivant une modulation comportant un nombre déterminé d'états de phase, caractérisé en ce qu'il consiste à transmettre en parallèle sur l'ensemble des canaux des trames de symboles utiles et des trames de symboles de référence, en insérant entre chaque trame utile une trame de symboles de référence et en alternant ($F_1$, $F_3$, $F_5..F_{41}$) chaque symbole de référence avec un symbole utile ($F_2$, $F_4---F_{40}$) dans chaque trame de symboles de référence, à évaluer (11) en démodulation le canal HF sur les porteuses des canaux HF transportant les symboles de référence en effectuant pour chaque symbole de référence émis le rapport (Cij) entre la valeur (Srefij) du signal qui lui correspond et une valeur de référence connue (Ref), à déterminer (14) les valeurs de bruits instantané en effectuant pour chaque canal le carré de la différence entre sa valeur bruitée et sa valeur estimée filtrée, à effectuer un filtrage temporel (12) des valeurs estimées des canaux sur chacune des porteuses en calculant les coefficients du filtre qui rendent minimum l'erreur moyenne d'estimation et à décoder (5) chaque symbole reçu sur chacune des porteuses par une transformée de Fourier des échantillons de la trame temporelle utile.

2. Procédé selon la revendication 1, caractérisé en ce que le filtrage temporel est suivi d'un filtrage passe-bas fréquentiel (13).

3. Procédé selon l'une quelconque des revendications 1 et 2, caractérisé en ce qu'il consiste à estimer la dérive Doppler (15) du signal reçu sur un canal en effectuant une moyenne sur l'ensemble des porteuses des différences de phase trouvées entre deux trames successives relativement à la valeur de bruit estimée du canal.

## Patentansprüche

1. Verfahren zur kohärenten Modulation und Demodulation für die Übertragung von Daten mit großem Durchsatz mittels Hochfrequenzen, wobei parallel auf einer bestimmten Anzahl von Kanälen mit geringem Durchsatz ($F_1 ... F_{41}$) Nutzinformationssymbole und Referenzsymbole übertragen werden, wobei die diese Symbole darstellenden

**EP 0 549 445 B1**

Signale gemäß einer Modulation moduliert werden, die eine bestimmte Anzahl von Phasenzuständen enthält, dadurch gekennzeichnet, daß das Verfahren darin besteht, parallel auf einer Gruppe von Kanälen Rahmen von Nutzsymbolen und Rahmen von Referenzsymbolen zu übertragen, indem zwischen je zwei Nutzrahmen ein Referenzsymbolrahmen eingefügt wird und indem abwechselnd ($F_1$, $F_3$, $F_5$, ... $F_{41}$) jedes Referenzsymbol mit einem Nutzsymbol ($F_2$, $F_4$ ... $F_{40}$) in jedem Referenzsymbolrahmen abwechselt, indem weiter bei der Demodulation (11) der Hochfrequenzkanal bezüglich der Träger der Hochfrequenzkanäle, die die Referenzsymbole tragen, bewertet wird, indem für jedes ausgesendete Referenzsymbol das Verhältnis ($C_{ij}$) zwischen dem Wert ($Sref_{ij}$) des ihm entsprechenden Signals und einem bekannten Referenzwert (Ref) gebildet wird, indem die Werte des augenblicklichen Rauschens durch Bildung des Quadrats der Differenz zwischen dem verrauschten Wert und dem geschätzten gefilterten Wert für jeden Kanal bestimmt werden (14), indem eine zeitliche Filterung (12) der geschätzten Werte der Kanäle für jeden der Träger durch Berechnung der Filterkoeffizienten durchgeführt wird, die den mittleren Schätzfehler minimieren, und indem jedes empfangene Symbol für jeden Träger durch eine Fourier-Transformierte der Tastproben des Nutzzeitrahmens dekodiert wird (5).

2. Verfahren nach Anspruch 1, dadurch gekennzeichnet, daß auf die zeitliche Filterung eine Tiefpaß-Frequenzfilterung (13) folgt.

3. Verfahren nach einem beliebigen der Ansprüche 1 und 2, dadurch gekennzeichnet, daß es darin besteht, die Doppler-Abweichung (15) des empfangenen Signals auf einem Kanal abzuschätzen, indem ein Mittelwert der Phasendifferenzen über die Gesamtheit der Träger zwischen zwei aufeinanderfolgenden Rahmen bezüglich des geschätzten Rauschwerts des Kanals gebildet wird.

**Claims**

1. Method of coherant modulation and demodulation for HF high bit rate data transmission of the type consisting in transmitting useful information symbols and reference symbols in parallel over a specified number of low bit rate channels ($F_1$...$F_{41}$), the signals representing these symbols being modulated according to a modulation which includes a specified number of phase states, characterized in that it consists in transmiting useful symbol frames and reference symbol frames in parallel over the set of channels, whilst inserting a reference symbol frame between each useful frame and alternating ($F_1$, $F_3$, $F_5$...$F_{41}$) each reference symbol with a useful symbol ($F_2$, $F_4$---$F_{40}$) in each reference symbol frame, in evaluating (11) during demodulation the HF channel in relation to the carriers of the HF channels transporting the reference symbols by taking, for each reference symbol sent, the ratio ($C_{ij}$) between the value ($Srefij$) of the signal corresponding thereto and a known reference value (Ref), in determining (14) the values of instantanious noise by taking, for each channel, the square of the difference between its noise-affected value and its filtered estimated value, in performing a temporal filtering (12) of the estimated values of the channels in relation to each of the carriers by calculating the coefficients of the filter which minimize the mean error of estimation, and in decoding (5) each symbol received on each of the carriers through a Fourier transform of the samples of the useful temporal frame.

2. Method according to Claim 1, characterized in that the temporal filtering is followed by a frequency low-pass filtering (13).

3. Method according to any one of Claims 1 and 2, characterized in that it consists in estimating the Doppler shift (15) of the signal received over a channel by taking a mean over the set of carriers of the phase differences found between two successive frames relative to the estimated noise value of the channel.

| Fréquences | Première trame | Deuxième trame |
|------------|----------------|----------------|
| F1 | | |
| F2 | | |
| F3 | | |
| F4 | | |
| . | | |
| . | | |
| . | | |
| Fi | | |
| . | | |
| . | | |
| F38 | | |
| F39 | | |
| F40 | | |
| F41 | | |

2 * 22.5 ms = 45 ms

Porteuses de référence

Porteuses utiles

## FIG.1

2T = 45 ms ( 324 échantillons )

$T_u \cong$ 17.77 ms ( 128 éch. )    $T_u \cong$ 17.77 ms ( 128 éch. )

$\frac{T_G}{2}$    $T_G \cong$ 4.72 ms ( 34 éch.)    $\frac{T_G}{2}$

## FIG.2

2 trames vocodées

54 bits | 54 bits

42 bits à protéger

21 symboles QPSK

4/3

28 symboles 8PSK

66 bits non protégés

33 symboles QPSK

**CODAGE**
21 bits/trame à protéger
1

61 symboles

**ENTRELACEMENT**
d'ordre n
2

**MODULATION 41 PORTEUSES**
1 trame : 21 réf. et 20 utiles
1 trame : 41 utiles
3

CANAL IONOSPHERIQUE

**SYMBOLES DE REFERENCE**

**DEMODULATION**
après estimation du canal
4

**DESENTRELACEMENT**
5

**DECODAGE**
6

2 trames vocodées

54 bits | 54 bits

# FIG.3

registres: $7n_2(n_1-1)$　$7(k-1)(n_1-1)$　$7n_1$　$7(n_1-1)$　$7_1$　$7_0$

Entrée

prises:

$n$　$k-1$　$1$　$0$

8

1

$k-1$　0

$n_2$

Sortie

## FIG. 4A

Entrée

$n_2$ 10

$k-1$　0

1

entrées: $n_2$　$k-1$　$1$　$0$

Sortie

$0...\infty$

registres: $9[(n_2(n_1-1)]$　$9(k-1)(n_1-1)$　$9(n_1-1)$　$9_1$　$9_0$

## FIG. 4B

**Acquisition des (4m+1) premières trames** — 11

Stockage des signaux sur porteuses de référence 1 trame sur 2

$Sref_{ij}$ avec i,j impairs    $i \in [1,4m+1]$  $j \in [1,41]$

Evaluation du canal HF sur porteuses de référence 1 trame sur 2

$$C_{ij} = \frac{Sref_{ij}}{Ref_{ij}} \text{ où } Ref_{ij} \text{ est le symbole de référence émis}$$

Stockage des signaux utiles sur porteuses à partir de la trame 2m+1

$Sut_{ij}$  avec $i \in [2m+1,4m+1]$  $j \in [1,41]$  j pair sur trame Ref.

---

**Filtrage temporel des $C_{ij}$ sur la trame de 2m+1** — 12

➤ Moyennage temporel si trame de référence
  (2m+1 coefficients)

**ou**  ➤ Interpolation temporelle si trame utile
  (2m coefficients)

➤ $Cmoy_{2m+1\,j}$  avec j impair et $j \in [1,41]$

---

**Filtrage fréquentiel des $Cmoy_{ij}$ sur la trame de 2m+1** — 13

➤ Moyennage sur les porteuses impaires

**et**  ➤ Interpolation sur les porteuses paires

➤ $Canal_{2m+1\,j}$  avec $j \in [1,41]$

---

**Estimation du bruit sur la trame 2m+1** — 14

➤ $Bruit_{2m+1\,j}$  avec $j \in [1,41]$

---

**Estimation de la dérive Doppler sur la trame 2m+1** — 15

---

**Calcul et stockage des produits sur la trame 2m+1** — 16

$$Prod\,(2m+1,j) = \frac{Sut_{2m+1\,j} \cdot Canal_{2m+1\,j}}{Bruit_{2m+1\,j}}$$

---

**Acquisition d'une nouvelle trame** — 17

Décalage temporel des tableaux de signaux $Sref_{ij}$ et $Sut_{ij}$

## FIG.5